# NEUE EUROPÄISCHE PATENTSCHRIFT

(11) **EP 0 617 219 B2**
(45) Veröffentlichungstag und Bekanntmachung des Hinweises auf die Entscheidung über den Einspruch: **23.06.2004**
(45) Hinweis auf die Patenterteilung: 03.03.1999
(21) Anmeldenummer: 94100838.5
(22) Anmeldetag: 21.01.1994
(51) Int. Cl.: F16L 9/12

(54) **Verwendung von Sperrschichtkunststoffen als Festigkeitsträger in Kraftfahrzeugrohrleitungen**
Use of plastic materials having barrier layers as reinforcement in vehicle conduits
Utilisation de matière plastique comprenant des couches-barrières servant au renforcement de conduites destinées aux véhicules automobiles

(30) Priorität: 26.03.1993 DE 4309829
(43) Veröffentlichungstag der Anmeldung: 28.09.1994
(73) Patentinhaber: Technoflow Fuel-Systems GmbH, 34277 Fuldabrück (DE)
(72) Erfinder: Brunnhofer, Erwin, D-34277 Fuldabrück (DE)
(74) Vertreter: Honke, Manfred, Dr.-Ing.

(56) Entgegenhaltungen:
- EP-A- 0 542 185
- EP-A- 0 558 373
- DE-C- 4 001 125
- 'DIN 73378: ROHRE AUS POLYAMID FÜR KRAFTFAHRZEUGE' Dezember 1990 , DEUTSCHE INDUSTRIE NORM , GERMANY
- 'DIN 7728: KUNSTSTOFFE' Januar 1988 , DEUTSCHE INDUSTRIE NORM , GERMANY

## Beschreibung

Die Erfindung betrifft Kraftfahrzeugrohrleitungen, bei denen Sperrschichtkunststoffe als Festigkeitsträger verwendet werden. - Der Begriff Sperrschichtkunststoff besagt, daß der Kunststoff in bezug auf die fluiden Medien, die solche Kraftfahrzeugrohrleitungen zu führen haben, in hohem Maße diffusionsdicht ist und keine störenden, extrahierbaren Bestandteile aufweist. Festigkeitsträger bedeutet, daß die mechanische Festigkeit der Kraftfahrzeugrohrleitung hauptsächlich durch diese Kunststoffe bestimmt ist. Sie bilden insoweit gleichsam das tragende Element. Festigkeit steht im Rahmen der Erfindung summarisch für z. B. Zugfestigkeit, Biegefestigkeit, Zähigkeit, Sprödigkeit, wozu auf DIN 73378 verwiesen wird. Der Ausdruck Kraftfahrzeugrohrleitung bezeichnet auch Schläuche.

Kraftfahrzeugrohrleitungen haben in erheblichem Maße komplexe Beanspruchungen aufzunehmen, und zwar in einem weiten Temperaturbereich von minus 40°C bis plus 150°C. Die Kunststoffe solcher Kraftfahrzeugrohrleitungen sind entsprechend eingestellt. Zumeist sind solche Kraftfahrzeugrohrleitungen mehrschichtig aufgebaut. Die herrschende Baulehre geht dahin, die Kunststoffe so auszuwählen, daß sie spezielle Funktionen erfüllen. So ist es bekannt (vgl. DE 41 12 668 A1, S. 1, Zeile 3 bis 18), daß Polyamide gute mechanische Eigenschaften, insbes eine hohe Zahigkeit, aufweisen, jedoch eine schlechte Sperrwirkung besitzen. Sie sind insoweit keine Sperrschichtkunststoffe. Polyester besitzen demgegenüber eine ausgezeichnete Sperrwirkung sowohl gegenüber polaren als auch unpolaren Medien, die Festigkeit, insbes. die Zähigkeit, sind jedoch nicht ausreichend. Polyester sind insoweit spröde Kunststoffe.

Zusammenfassend ist festzustellen, daß für Kraftfahrzeugrohrleitungen geeignete Kunststoffe, die eine hohe Sperrwirkung aufweisen, in der Regel unmodifiziert eingesetzt werden und eine hohe Kristallinität aufweisen. Möglicherweise besitzen diese auch für viele Zwecke ausreichende Festigkeiten, diese sind jedoch im Schlagversuch nach DIN 73378 zumindest bei tiefen Temperaturen von minus 40°C nicht ausreichend. Wenn man derartige Sperrschichtkunststoffe durch Legieren oder Blenden modifiziert, so gelingt es zwar, die an sich spröden Kunststoffe zäher und weicher zu machen, zugleich verschlechtert sich jedoch die Sperrwirkung dramatisch.

Nach der herrschenden Baulehre findet bei Kraftfahrzeugrohrleitungen ein Verbund von Schichten aus unterschiedlichem Kunststoff statt, um die unterschiedlichen Eigenschaften der Kunststoffe gleichsam additiv auszunutzen. Der Verbund erfolgt zumeist über Haftvermittler, die eine starke Kohäsion an den Grenzflächen dieser Kunststoffschichten bewirken und ihrerseits lösemittel- und temperaturbeständig sind. Bewährt hat sich eine Kraftfahrzeugrohrleitung (DE 40 01 125 C1), die aus einer rohrförmigen Außenschicht aus Polyamid 11 oder 12, einer Zwischenschicht aus Polyamid 6, einer Lösungsmittelinhibitorschicht aus einem Copolymer aus Äthylen und Vinylalkohol und einer Innenschicht aus Polyamid 6 besteht, wobei zwischen der Außenschicht und der Zwischenschicht eine dünne Haftvermittlerschicht aus Polyäthylen oder Polypropylen zwischengeschaltet ist. Es versteht sich, daß hier alle Schichten auch zur Festigkeit beitragen, nicht alle Schichten erfüllen jedoch eine ausreichende Sperrfunktion. Die bekannten Kraftfahrzeugrohrleitungen sind in werkstoffmäßiger Hinsicht aufwendig und verlangen häufig auch verhältnismäßig große Wanddicken und damit einen hohen Werkstoffeinsatz

Der Erfindung liegt die Aufgabe zugrunde, eine fahrzeugrohrleitung der beschriebenen Zweckbestimmung in werkstoffmäßiger Hinsicht zu vereinfachen, und zwar so, daß auch eine Reduzierung der Wanddikke möglich ist.

Die Aufgabe wird gelost durch eine Kraftfahrzeugrohrleitung mit den Merkmalen des Anspruches 1.

Die Lösung dieser Aufgabe beruht auf der Verwendung von Sperrschichtkunststoffen in Form von durch Koextrusion erzeugten Laminatverbundgesamtheiten, deren Laminatfilme durch Haftvermittlerfilme in Verbund gebracht sind, als Festigkeitsträger in Kraftfahrzeugrohrleitungen mit der Maßgabe, daß die Dicke und die Anzahl der Laminatfilme in einer Laminatverbundgesamtheit so gewählt ist, daß die Kraftfahrzeugrohrleitung insgesamt den Vorschriften nach DIN 73378 genügt. Als Sperrschichtkunststoffe werden die in Patentanspruch 1 aufgeführten eingesetzt. Als Haftvermittler werden die üblichen Kunststoffe und Kunststoffmischungen eingesetzt. Sie werden nach Maßgabe der verwendeten Sperrschichtkunststoffe ausgewählt und eingerichtet und sollen ausreichend lösemittel- und temperaturbeständig sein. bzw. einen entsprechenden lösemittel- und temperaturbeständigen Verbund herbeiführen. Nach bevorzugter Ausführungsform der Erfindung sind die Haftvermittlerfilme schubspannungsausgleichend eingerichtet. Sie können zusätzlich auch die Funktion von Rißabsorbtionsschichten aufweisen

Laminatverbundgesamtheiten sind an sich bekannt, z. B. in Form von Verbundglasscheiben und Verbundhölzern. Das sind jedoch Bauteile, die im Einsatz erhebliche Biegeverformungen, die zu Querschnittsverwölbungen führen, nicht aufzunehmen haben. Wo Biegebeanspruchungen auftreten, bleiben diese im Rahmen der klassischen linearen Biegetheorie, für die der Begriff der neutralen Faser wesentlich ist. Demgegenüber haben Kraftfahrzeugrohrleitungen erheblich größere Biegeverformungen aufzunehmen, und zwar auch in Bereichen, die von der klassischen linearen Biegetheorie nicht mehr beherrscht werden. In dem Merkmal Laminatfilm kommt zum Ausdruck, daß die Dicke einer Laminatverbundschicht zwar der Dicke eines Festigkeitsträgers in Kraftfahrzeugrohrleitungen entspricht, die Dicke der einzelnen Filme jedoch geringer ist. Zum Begriff Laminatverbundgesamtheit gehört, daß eine Mehrzahl von Laminatfilmen verwendet wird. Im Rahmen der Erfindung wird zumindest mit zwei, vorzugsweise aber mit mehr als zwei und insbes. mit mehr als drei Laminatverbundfilmen gearbeitet.

Die Erfindung geht von der Erkenntnis aus, daß die für Kraftfahrzeugrohrleitungen bekannten spröden Sperrschichtkunststoffe trotz ihrer Sprodigkeit als Laminatverbundgesamtheiten in mechanischer Hinsicht allen Anforderungen genügen und folglich als Festigkeitsträger eingesetzt werden können, wobei nichtsdestoweniger die Sperrfunktion voll erhalten bleibt Es versteht sich, daß für die Haftvermittlerfilme solche Kunststoffe eingesetzt werden, die ausreichend losemittel- und temperaturbeständig sind. Je spröder der Sperrschichtkunststoff ist, desto dünner muß die Schicht ausgebildet sein. Je weicher der Haftvermittlerfilm ist, desto dünner kann diese Schicht sein.

Im einzelnen bestehen im Rahmen der Erfindung mehrere Möglichkeiten der weiteren Auslegung und Gestaltung So besteht die Möglichkeit, die Verwendung so einzurichten, daß alle Laminatfilme aus dem gleichen Sperrschichtkunststoff bestehen. Es können aber auch die einzelnen Laminatfilme oder einige davon aus unterschiedlichen Sperrschichtkunststoffen aufgebaut sein. Die Dicke der Laminatfilme liegt im Rahmen der erfindungsgemäßen Kraftfahrzeugrohrleitung unter 0,2 mm. Die Dicke der Haftvermittlerfilme ist geringer als die Dicke der Laminatfilme. Vorzugsweise ist die Dicke der Haftvermittlerfilme nur etwa halb so groß wie die der Laminatfilme.

Im Rahmen der Erfindung kann die Wandung der gesamten Rohrleitung als Laminatverbundgesamtheit ausgeführt sein. Es besteht aber auch die Möglichkeit, den Aufbau so vorzunehmen, daß die Laminatverbundgesamtheit lediglich eine Schicht (oder deren mehrere) in der Kraftfahrzeugrohrleitung bildet und mit weiteren Schichten vereinigt ist, die nicht als Laminatverbundgesamtheiten aufgebaut sind und zusätzliche Funktionen erfüllen. Zur Erfindung gehört insbesondere die Maßgabe, daß die Dicke und die Anzahl der Laminatfilme so gewählt ist, daß die Kraftfahrzeugrohrleitung auch bei tiefen Temperaturen von zumindest minus 40°C den Vorschriften von DIN 73378 genügt.

Bezüglich der Kennzeichnungen für die Kunststoffe, die im Patentanspruch 1 erscheinen, wird auf die in DIN 7728 vom 07. Juli 1987 festgelegte Normierung verwiesen.

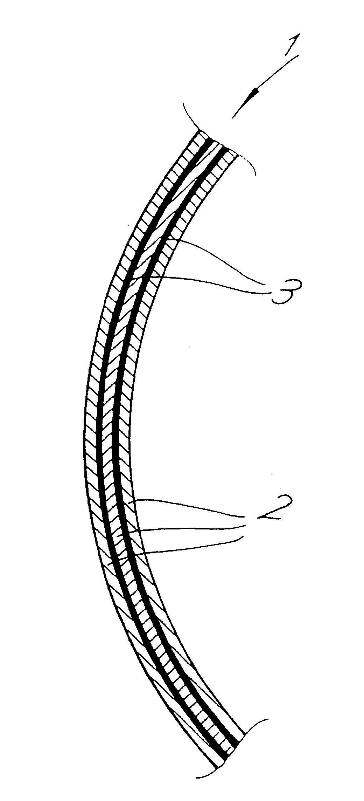

Die einzige Figur zeigt einen stark vergrößerten Ausschnitt aus einer erfindungsgemäßen Kraftfahrzeugrohrleitung im Querschnitt. Man erkennt die Laminatverbundgesamtheit 1, die Laminatfilme 2 und die Haftvermittlerfilme 3.

## Patentansprüche

1. Kraftfahrzeugrohrleitung mit einer durch Koextrusion erzeugten Laminatverbundgesamtheit (1), welche Laminatverbundgesamtheit (1) ausschließlich Laminatfilme (2) aufweist, die aus Sperrschichtkunststoffen bestehen,
wobei alle Laminatfilme (1) durch zwischengeschaltete Haftvermittlerfilme (3) in Verbindung gebracht sind, wobei die Dicke aller Laminatfilme (1) geringer als 0,2 mm und die Dicke der Haftvermittlerfilme (3) geringer als die Dicke der Laminatfilme (1) ist,
und wobei als Sperrschichtkunststoffe solche der Gruppe Copolymer aus Ethylen/Vinylalkohol, Polyvinylidenchlorid, Polyethylen, Polypropylen, Polybuten, Polymethylpenten, Polyoxymethylen, Polybutylenterephthalat, Polyethylenterephthalat, Polyvinylidenfluorid, Copolymer aus Tetrafluorethylen/Hexafluorpropylen, Copolymer aus Ethylen/Tetrafluorethylen, Copolymer aus Ethylcellulose/Tetrafluorethylen, Perfluoro-Alkoxyalkan oder kompatible Mischungen davon, eingesetzt sind.

2. Kraftfahrzeugrohrleitung nach Anspruch 1 mit der Maßgabe, dass die Haftvermittlerfilme schubspannungsausgleichend eingerichtet sind.

3. Kraftfahrzeugrohrleitung nach einem der Ansprüche 1 bis 2 mit der Maßgabe, dass alle Laminatfilme aus dem gleichen Sperrschichtkunststoff bestehen.

4. Kraftfahrzeugrohrleitung nach einem der Ansprüche 1 bis 3 mit der Maßgabe, dass die Laminatfilme aus unterschiedlichen Sperrschichtkunststoffen bestehen.

5. Kraftfahrzeugrohrleitung nach einem der Ansprüche 1 bis 4 mit der Maßgabe, dass die Wandung der gesamten Rohrleitung als Laminatverbundgesamtheit ausgeführt ist.

6. Kraftfahrzeugrohrleitung nach einem der Ansprüche 1 bis 5 mit der Maßgabe, dass die Laminatverbundgesamtheit zumindest eine Schicht in der Kraftfahrzeugrohrleitung bildet und mit weiteren Schichten vereinigt ist.

## Claims

1. A motor vehicle pipeline comprising a laminated composite entity (1) produced by coextrusion, which laminated composite entity (1) exclusively comprises laminate films (2) which consist of barrier layer synthetic materials,
wherein all the laminate films (2) are joined by interposed bonding agent films (3), wherein the thickness of all the laminate films (2) is less than 0.2 mm and the thickness of the bonding agent films (3) is less than the thickness of the laminate films (2),
and wherein materials of the group comprising ethylene/vinyl alcohol copolymers, polyvinylidene chloride, polyethylene, polypropylene, polybutene, polymethylpentene, polyoxymethyline, polybutylene terephthalate, polyethylene terephthalate, polyvinylidene fluoride, tetrafluoroethylene/hexafluoropropylene copolymers, ethylene/tetraflouoroethylene copolymers, ethyl cellulose/tetrafluoroethylene copolymers, a perfluoro-oxyalkane, or compatible mixtures therof, are used as barrier layer synthetic materials.

2. A motor vehicle pipeline according to claim 1, with the proviso that the bonding agent films are arranged to even out shearing stress.

3. A motor vehicle pipeline according to either one of claims 1 or 2, with the proviso that all the laminate films consist of the same barrier layer synthetic material.

4. A motor vehicle pipeline according to any one of claims 1 to 3, with the proviso that all the laminate films consist of different barrier layer synthetic materials.

5. A motor vehicle pipeline according to any one of claims 1 to 4, with the proviso that the wall of the entire pipeline is produced as a laminated composite entity.

6. A motor vehicle pipeline according to any one of claims 1 to 5, with the proviso that the laminated composite entity forms at least one layer in the motor vehicle pipeline and is combined with further layers.

## Revendications

1. Tuyau pour automobile, comprenant un ensemble composite stratifié obtenu par coextrusion (1), cet ensemble composite stratifié (1) comprenant exclusivement des films laminés (2) qui sont constitués par des matières synthétiques de couche barrière,
dans lequel tous les films laminés (1) sont assemblés par l'intermédiaire de films d'adhérence intercalés (3), l'épaisseur de tous les films laminés (1) étant inférieure à 0,2 mm et l'épaisseur des films d'adhérence (3) étant inférieure à l'épaisseur des films laminés (1),
et dans lequel, en tant que matières synthétiques de couche barrière, on utilise celles appartenant au groupe formé par les copolymères éthylène/alcool vinylique, le poly(chlorure de vinylidène), le polyéthylène, le polypropylène, le polybutène, le polyméthylpentène, le polyoxyméthylène, le poly(téréphtalate de butène), le poly(téréphtalate d'éthylène), le poly(fluorure de vinylidène), les copolymères tétrafluoroéthylène/hexafluoropropylène, les copolymères éthylène/tétrafluoroéthylène, les copolymères éthylcellulose/tétrafluoroéthyléne, les perfluoroalcoxyalcanes ou les mélanges compatibles de ceux-ci.

2. Tuyau pour automobile selon la revendication 1, étant entendu que les films d'adhérence sont insérés de façon à compenser les tensions de cisaillement.

3. Tuyau pour automobile selon la revendication 1 ou 2, étant entendu que tous les films laminés sont constitués par la même matière synthétique de couche barrière.

4. Tuyau pour automobile selon l'une quelconque des revendications 1 à 3, étant entendu que les films laminés sont constitués par des matières synthétiques de couche barrière différentes.

5. Tuyau pour automobile selon l'une quelconque des revendications 1 à 4, étant entendu que la paroi de la totalité du tuyau est réalisée sous la forme d'un ensemble composite stratifié.

6. Tuyau pour automobile selon l'une quelconque des revendications 1 à 5, étant entendu que l'ensemble composite stratifié constitue au moins une couche du tuyau pour automobile et qu'il est réuni à d'autres couches.
